# EUROPEAN PATENT APPLICATION

(11) **EP 0 708 417 A1**
(43) Date of publication of application: **24.04.1996**
(21) Application number: 95850166.0
(22) Date of filing: 25.09.1995
(51) Int. Cl.: G07B 15/00, G07F 17/42

(54) **Method and device for obtaining travel tickets**

(30) Priority: 26.09.1994 SE 9403246
(71) Applicant: TRELL, Anders Edvard, S-117 30 Stockholm (SE); Isaksson, Lars, S-754 28 Uppsala (SE)
(72) Inventor: TRELL, Anders Edvard, S-117 30 Stockholm (SE); Isaksson, Lars, S-754 28 Uppsala (SE)
(74) Representative: Norén, Per Bo Arne

(57) **Abstract**

A method and a device for obtaining preferably travel tickets, involving the steps to make a prereservation by means of contact with a reservation office or similar, which is stored in a data base with a unique reservation code number communicated to the customer, to input said code number into an unmanned terminal, whereafter the terminal after completed input via telephone network, computer network or similar establishes contact with related data base and transmits the code number and obtains stored inforymation relating to the reservation, whereafter at least part of the information obtained is communicated to the customer as visual and/or audio information for identification of the reservation, whereafter the customer on basis of said information is offered possibility to pay at least actual amount by means of a credit card reader or bank note reader, the terminal, after verification of payment made, by means of an associated printer printing the specific travel ticket or other document for access by the customer. Contact with related data base is established only after that the inputted code number completely or partly has been accepted by means of an algoritm for calculation of a certain mathematical, numerical or temporal relationship included in a correctly obtained code number and/or establishment of connection is choosen against one out of at least two individual data bases having from each other separate purposes on basis of for each individual data base different numerical code prefix or code parts in inputted and approved code number sequences.

## Description

The present invention relates to a method for obtaining preferably travel tickets, and a device for utilization of the method.

To purchase travel tickets - for example relating to a train journey with Swedish Railroads (hereinafter SJ), which has been choosen as a descriptive example - may be difficult, even if (as more frequently) reservation has been made on SJ's 020-757575 telephone number. To obtain the travel document - the ticket - remains as a practical problem for the traveller. Reduction in the number of ticket sales offices (for example in Kil) and restricted opening hours (for example in Uppsala), and sometimes long queues if and when a ticket office is maintained open, are factors causing such a problem. As an alternative, one may visit a so called ATG-outlet and purchase the reserved ticket, but opening hours and availability in sparsely populated areas cause restrictions and locations far away from a railway station may cause problems, as well as the extra charge imposed, presently SEK 10. Some attempts have been made to solve the problem by means of automatic ticketing machines, e.g. as disclosed in US, A, 4 449 186 and DE, A1, 3 221 235, but these attempts have not been widely used and successful, in view of an expensive and complicated technical design, a difficult and for the layman complicated and timeconsuming operation, a restricted number of possible and obtainable destinations and lack of assistance when deciding the travel route, and lack of opportunity to reserve "Red Departure" (reduced fare) and similar. A major problem is also that previously known ticketing machines either are connected continously to a main computer, or that each transaction involves long connection periods. Furthermore, previously known ticketing machines are of dedicated type, communicating with one main computer only, and thus only able to issue one type of tickets, e.g. bus tickets. The advantage with automatic ticketing machines is that same can be maintained open 24 hours or for example as long as a waiting room is maintained open, but so far, the advantages of automatic ticketing machines have not surpassed the above mentioned disadvantages, apart from automatic ticket machines having strictly specified destinations of travel, for example the frequently departing train service between UPPSALA - STOCKHOLM.

The object of the present invention is to facilitate fast, simple and complete ticket access, also including seat reservations, campaign offers of discounts and similar, which can be made available practically 24 hours everywhere - also in sparsely populated areas wherever for example a station with a waiting room exists - and which would not require additional "service" charges for the traveller/customer. A further object is to facilitate issuance of different types of documents, e.g. bus, train and boat tickets, by communication with more than one central computer data base. A still further object is to reduce computer connection time and to prevent connections established on basis of non-valid reservation codes. The invention is primarily based on automated cooperation with SJ's 020-757575 number/service, or similar, and makes use of relatively cheap existing standard components with conventional operation, for example a ticket printer.

The method according to the present invention for obtaining preferably travel tickets, involves the steps to make a prereservation by means of contact with a reservation office or similar, which is stored in a data base with a unique reservation code number communicated to the customer, to input said code number into an unmanned terminal, whereafter the terminal after completed input via telephone network, computer network or similar establishes contact with related data base and transmits the code number and obtains stored information relating to the reservation, whereafter at least part of the information obtained is communicated to the customer as visual and/or audio information for identification of the reservation, whereafter the customer on basis of said information is offered possibility to pay at least actual amount by means of a credit card reader or bank note reader, the terminal, after verification of payment made, by means of an associated printer printing the specific travel ticket or other document for access by the customer, and it is mainly characterized in that contact with related data base is established only after that the inputted code number completely or partly has been accepted by means of an algoritm for calculation of a certain mathematical, numerical or temporal relationship included in a correctly obtained code number and/or that establishment of connection is choosen against one of at least two individual data bases having from each other separate purposes on basis of for each individual data base different numerical code prefix or code parts in inputted and approved code number sequence.

The device according to the invention for utilizing the method to obtain preferably travel tickets according to the method is based on that information concerning intended document previously is stored electronically in a data base with a unique code number for the information, and comprises a terminal arranged to facilitate communication with related data base via telephone network, computer network or similar, further including a means for input of code number, after completed input arranged to establish contact with said data base for transmission of inputted code number and for receipt of related stored information, which at least partly is shown on an alphanumerical display unit arranged by the terminal, said device also including a card reader for credit or pay cards and/or a bank note reader for input of an amount shown on the display unit, validated payment being arranged to cause printing of intended ticket or other document for immediate access at the terminal, and it is mainly characterized in that the terminal includes a means for identifying a numerical part of an approved inputted code number sequence and on basis thereof controlling establishment of connection against one out of at least two individual data bases having from each other different purposes and/or that the terminal includes a means for completely or partly validating inputted code number by means of an algoritm for calculating a certain mathematical, numerical or temporal relationship in a correctly obtained code number, said means being arranged to initiate establishment of contact with related data base only for approved code number sequences.

The inventive thought and the method according to the present invention will be more fully disclosed by the example of a preferred embodiment described more in detail below, preceeded by a short description of the operation today of with regard to the 020-service/number, used as an example.

A person intending to travel may 24 hours per day from any location in Sweden by telephone (also coin operated telephones etc.) for a local call charge reach this number, and obtain competent travel advice, information concerning discounts, seat reservation etc., and also reserve the negotiated ticket, which is stored in a computer data base by the staff operating the 020-number. It is now stored in electronic form ready for a later following, hereafter described, manual purchase. The traveller is given a code number, presently alphanumerical, which should be stated when the purchase is made. The used sales office connects "on line" with the computer terminal connectable to the computer data base by keying in necessary instructions and the customer's code number on a conventional computer keyboard, and, provided that there is match with said code, the previously only electronically existing "ticket" is transformed into a physically existing and "sellable" form by means of a connected standard printer, which prints necessary information, and by printing the SJ logotype, validates the present travel documents from a previously non-printed standard roll of paper.

The device according to the present invention relates to a customer operated automatic terminal, arranged to cooperate with the as an example choosen 020-757575 service in such a way, that same after being influenced by a customer, for example as herein described by the telephone network, but also by means of other networks, e.g. cluster networks, can address the reservation data base of said service, perform transmission of instructions and code information and interact with same, and on acceptance of code from the data base and confirmation concerning completed payment from the customer and with information obtained from the data base, print and eject to the customer the ticket corresponding to the code, and preferably in a successively following step inform the data base to cancel corresponding reservation. With regard to the applications and conditions choosen above as example, an embodiment is preferred according to the decription given below, which initially lists basic components, all being of cheap standard type.

In order to avoid that the device according to the invention should not be continously connected to the computer data base (a solution only acceptable for highly frequented installations), which would be unnecessarily expensive and may cause overloading problems, an automatic number dialling device, or for a dedicated telephone circuit, a line connecting device is used, and for the computer communication following connection, a modem would be required, if communication as here described is performed via the telephone network. For the customer's use, as will be obvious later, no speech communication components are required, but for customer input a keyboard is required. In view of costs and risk for damage, same should not be a conventional alphanumerical computer keyboard but instead a conventional numerical telephone key pad - 3x4-matrix having 2 function keys available, or 4x4-matrix having 6 function keys available - and which can and should be of a type resistant against vandalism. An alphanumeric message display should be available to assist and guide the customer (e.g. for ticket confirmation prior to payment). A device for receiving payment from the customer is also required - credit cards and bank notes are today what primarily should be considered and both can be handled by means of standard components. Finally, a standard printer can print out SJ's standard tickets from a non-printed standard paper roll and make same available to the customer, for example in a compartment with a lid.

In order to further describe the operation according to the present invention, the operation of a preferred embodiment will described with regard to the application choosen as an example when same is used by a customer. What the customer can see is a waiting device, rather similar to an automatic cash dispensing machine, having a key pad, necessary instructions etc., and by means of the key pad (1.) the ticket purchase is initiated, i.e. the customer keys in preferably directly and without any other initiation the reservation code (2.) obtained from the 020-service, possibly followed by, even though not necessary, depression of a function key, e.g. "ready". When a code has been completely entered, the automatic dialling device establishes contact between the modem and the "020" computer data base, the validity of the code is checked of the latter, and the computer data base (3.) transmits relevant reply information, e.g. to the display (4.). Confirmation of required payment (5.) is thereafter awaited, whereafter the printer (6.) is requested to print corresponding tickets, whereafter the present reservation may be cancelled in the computer data base. The telephone connection may also be maintained during a further short period of time, in order to give an immediately following customer a shorter operation time, but the connection is otherwise interrupted after this period of time, and the device returns to its initially described "wait state". The above numbered main features will now be more fully described.
**(1.) Key pad.** Even though same, as previously described, is preferred to be of conventional telephone type, and thereby being able to address the telephone network and thus also the 020-number, it is not preferred that such a communication is offered to the customer, only modem-computer communication (which does not have 020-757575 as telephone number!) can be established. The reason for this is that 020-connection and communication often is timeconsuming and may result in delays and queues, whereas modem-computer-connection typically is fast and within reasonable apparatus operation time. If 020-communication should be offered to the customer by the device according to the invention, this should preferably take place by means of siderelated components, whereafter the actual purchase of the reserved and in the computer data base stored ticket can take place in the ordinary fashion for the device, which thus is not blocked for other customers during the 020-conversation; or otherwise only allowed integrated in installations for sparsely populated areas. It is otherwise a condition that the customer in normal fashion from home or any other place by means of a telephone call makes a prereservation for his travel and for this purpose public coin operated telephones may also be used. Even if the keyboard was a standard alphanumerical computer keyboard and the 020-service fully computerized, the required time and the user complexity would constitute a disadvantage for an automatic device intended for public use.
**(2.) The reservation code.** Same is presently for the mentioned 020-service alphanumerical, and should thus give preference for a conventional computer keyboard. Due to previously stated reasons, and also for user friendliness, a conventional telephone key pad is preferred with regard to the present invention and with a small number of non-numerical "function keys". If the digits, as in U.S.A., are arranged with added letters, e.g. "2" with ABC, it is obviously also possible to transmit letters by assistance of a function key (F), e.g. F - 1 depression of "2" = A; 2 depressions = B; 3 depressions = C - F, but this will be complicated for the customer with risk for errors. A numerical code with a sufficient number of digits would be better; equally simple for the customer to write down and considerably more simple to use. The device is as mentioned normally in wait state, ready to accept input of digits from a customer, which when same has been completed may be accepted as start instructions without any other initiating procedure, which would involve an instruction and thus an extra operation by the customer. Accordingly, when a complete code with complete length has been entered by the key pad with a certain reasonable time period (preferably time monitored) between the depression of each key, the number dialler establishes the connection and the code can be repeated by the modem to the computer data base. The above features give a fair protection against establishment of a connection by means of "unauthorized tampering". However, an algoritm can be built into the stored program, e.g. two final "parity digits" must be in a certain mathematical, numerical or temporal relationship to the code in its entirity for acceptance of same -also for network connection; i.e. code entered by mischief is stopped and a predetermined number of such may also result in some type of alarm indication. Accordingly, connection to the computer data base is only established after an initial checking operation and provided that the result of same confirms that the code is of a valid type. Furthermore, the code may also include a prefix, suffix or any other information, which is used to indicate what computer data base to be contacted, provided that the device is of "multi-purpose type", i.e. intended to issue more than one type of documents, e.g. bus and train tickets.
**(3.) The computer data base.** Same is for the 020-number according to the present invention not only a conventional "passive" base, from which information is collected, but also "active" in such a respect, that same as reply to certain signals from the device according to the present invention also can transmit operational signals etc., and also take other desired actions, e.g. erase reservations when tickets have been purchased or if purchase has not taken by place within prescribed time from the date of reservation; transaction memory, etc. Furthermore, information concerning received payments may also be stored in a RAM-memory or other storage means in the device according to the invention, transmitted with related code number when the next purchase is made. Alternatively, such information, relating to a number of payments, can be transmitted as a "batch", either when a certain number of payments have been stored, or with certain time intervals. The total required connection time with the data base would thereby be further reduced. The modem included in the device is of standard type, but obviously modified and/or adapted to this particular application. By this philosophy, central computer data base-peripherially located modems, will each device according to the invention wherever placed and whatever time be equally valid for purchase of tickets, irrespective of destination/method of travel, which has previously not been the case with automatic train ticket machines. Furthermore, the previous possibility to make the purchase from a ticket office or ATG-outlet remains as before; the preferably commun computer data base can be informed when the purchase is made and of the type of outlet used and act accordingly and also only accept one purchase per code before cancelling the reservation etc. Since the action is initiated by the customer at the actual time of purchase and thereafter is almost totally controlled by the computer data base, this universal operation is achieved, and the operations to be performed by the customer can be made very simple and may be further simplified by instructions and information appearing on the display.
**(4.) The display.** As mentioned, same is preferably of alphanumerical standard type showing the code entered as well as running information and instructions, but for people with reduced eyesight, a loudspeaker can be added, which gives the same messages, e.g. by means of a speech synthetizer. These messages originate mainly from the computer data base, and as example of information, the customer can be shown that it is the correct ticket with correct price that is about to be issued before the customer makes his payment.
**(5.) Payment.** Primarily is credit card acceptance preferred, using conventional techniques. Since the device according to the invention communicates with a central computer, digit codes for the card can be read and checked, as well as the credit status for the card. Insertion of a credit card can also be used as a start signal; but this is disadvantageous from a general point of view and may also be unfair to bank note customers. The information on the credit card could also possibly be used as replacement for the reservation code, but this is also disadvantageous from a general point of view and with regard to flexibility, since it must be stated to the 020-staff when the reservation is made and stored in the computer data base for the specific ticket. At least for certain applications payment by bank notes using conventional techniques should be offered. However, certain problems therewith must be considered. Bank notes involve an obvious risk for theft and bank note operated machines are often subject to burglary, whereby their operation can be interrupted completely. Should a bank note reader be used, same should not be integrated to much with the structure of the device, but rather consist of a siderelated "hole in the wall/floor" input device, whereby outside influence does not result in access to the bank notes - they have disappeared behind the "wall" - and furthermore remaining operation for the device is not restricted, since a back-up system also may start up. To give return change is also a problem and with regard to bank note operated petrol pumps, this problem has resulted in that one fills up to payment made - even if the tank is overflowing. However, in the present case tickets are not printed on the non-printed standard paper roll by the conventional printer until the payment has been verified against the data base information.
**(6.) The printer.** First thereafter, and with required validation symbol printed, can the customer receive his correct, intended and valid ticket with all relevant data printed thereon. Firstly, this means that nothing worth stealing, e.g. a complete and valid travel ticket is never stored in the device according to the invention, or can be accomplished without accepted payment, whereby the motivation for theft from the device is nullified; and secondly, if a certain overpayment is accepted and verified, said amount can be printed as recoverable on the ticket for the traveller, which amount the customer later may recover on the station or the train. With regard to the printer, a warning indication for low paper roll may be incorporated and also be transmitted to the computer data base, as well as other types of operational problems or alarm indications, e.g. burglary attempts. With regard to the validation symbol, same may be electronical, e.g. bar code or magnetic strip encoded, as well as other printed information.

The invention has above been disclosed in relation to SJ's 020-757575-service/"data base" and train tickets. Also other data bases/tickets and similar, e.g. bus tickets, theatre tickets, boat and airplane tickets, validated prereserved gambling coupons/tickets etc. are also well adapted possible fields of use. Furthermore may "correct" computer data base be addressed, for example by using different numerical code prefix, and purchase can thus take place from different sources with only one device according to the invention, but this requires that consideration is given so that unreasonable queues and delays are not caused for intended main use; perhaps would such a "multiple" device be of particular use in sparsely populated areas. Furthermore, such a device may be arranged giving priority to a certain type of use under certain conditions, e.g. only open for issuance of train tickets during certain hours. Alternatively, it may be equipped with two key pads, one having priority over the other one, the priority key pad only usable for one purpose only, e.g. train tickets, whereas the other key pad can be used for communication with other data bases. For specific and restricted SJ-use, the device according to the invention could finally also be located on the trains, which nowadays are connected to the telephone network. With regard to reservations and obtaining a valid reservation code, a user may also make the reservation by means of computer communication, i.e. by using a computer at home or at work to access a reservation data base, e.g. by communication via Internet. A further field of use is reservation of hotel rooms, particularly with regard to hotels which are substantially unstaffed. A machine readable document from a device according to the present invention could be used to obtain a key card, which would open the reserved room during the period paid for. Such prepaid reservations could involve a reduced room charge, since the hotel owner would know that the reservation will be honoured by the person making the reservation. Obviously, this means that payment must be made a certain period of time prior to the date reserved.

The above example of an embodiment has substantially been related to a specific case of application, and it is thus only intended to serve as an example of application within the scope of the inventive thought as defined in the following claims. Furthermore, it is believed that the detailed description of this embodiment discloses the method according to the invention, as well as making it possible for a skilled person to implement the method in devices for utilization of same.

The invention is thus in no way restricted to the described example of an embodiment, but can be modified for many purposes of application within the scope of what has been described and the following claims.

## Claims

1. A method to obtain preferably travel tickets, involving the steps to make a prereservation by means of contact with a reservation office or similar, which is stored in a data base with a unique reservation code number communicated to the customer, to input said code number into an unmanned terminal, whereafter the terminal after completed input via telephone network, computer network or similar establishes contact with related data base and transmits the code number and obtains stored information relating to the reservation, whereafter at least part of the information obtained is communicated to the customer as visual and/or audio information for identification of the reservation, whereafter the customer on basis of said information is offered possibility to pay at least actual amount by means of a credit card reader or bank note reader, the terminal, after verification of payment made, by means of an associated printer printing the specific travel ticket or other document for access by the customer, **characterized in**, that contact with related data base is established only after that the inputted code number completely or partly has been accepted by means of an algoritm for calculation of a certain mathematical, numerical or temporal relationship included in a correctly obtained code number and/or that establishment of connection is choosen against one out of at least two individual data bases having from each other separate purposes on basis of for each individual data base different numerical code prefix or code parts in inputted and approved code number sequences.

2. A device to obtain preferably travel tickets according to the method in claim 1, information concerning intended document previously being stored electronically in a data base with a unique code number for the information, comprising a terminal arranged to facilitate communication with related data base via telephone network, computer network or similar, further including a means for input of code number, after completed input arranged to establish contact with said data base for transmission of inputted code number and for receipt of related stored information, which at least partly is shown on an alphanumerical display unit arranged by the terminal, said device also including a card reader for credit or pay cards and/or a bank note reader for input of an amount shown on the display unit, validated payment being arranged to cause printing of intended ticket or other document for immediate access at the terminal, **characterized in**, that the terminal includes a means for identifying a numerical part of an approved inputted code number sequence and on basis thereof controlling establishment of connection against one out of at least two individual data bases having from each other different purposes.

3. A device to obtain preferably travel tickets according to the method in claim 1, information concerning intended document previously being stored electronically in a data base with a unique code number for the information, comprising a terminal arranged to facilitate communication with related data base via telephone network, computer network or similar, further including a means for input of code number, after completed input arranged to establish contact with said data base for transmission of inputted code number and for receipt of related stored information, which at least partly is shown on an alphanumerical display unit arranged by the terminal, said device also including a card reader for credit or pay cards and/or a bank note reader for input of an amount shown on the display unit, validated payment being arranged to cause printing of intended ticket or other document for immediate access at the terminal, **characterized in**, that the terminal includes a means for completely or partly validating inputted code number by means of an algoritm for calculating a certain mathematical, numerical or temporal relationship in a correctly obtained code number, said means being arranged to initiate establishment of contact with related data base only for approved code number sequences.

4. Device according to claim 2 or 3, **characterized in**, that the terminal after verified payment for a transaction ensures that stored information in the data base concerning the transaction is completely or partly erased, established connection herefor preferably being maintained during a short predetermined time interval while awaiting a possible new and successive call from the terminal.

5. Device according to any one of claims 2 - 4, **characterized in**, that the document obtained from the terminal when printed is given a validation symbol, e.g. a bar code, magnetic strip encoded or other printed information.

6. Device according to any one of claims 2 - 5, **characterized in**, that the document obtained from the terminal, or a separetely printed document, includes information facilitating a refund of amount overpaid via a bank note reader associated with the terminal.

7. Device according to any one of claims 2 - 6, **characterized in**, that the terminal includes a storage means for storing information concerning the last payment and related transaction, and that this information is transmitted to related data base together with information concerning the code number of the next transaction.

8. Device according to any one of claims 2 - 6, **characterized in**, that the terminal includes a storage means for storing information concerning a number of completed transactions, and that this information is transmitted to related data base at certain time intervals and/or when a predetermined number of transactions have been stored.

9. Device according to any one of claims 2 - 8, **characterized in**, that the terminal under certain conditions, e.g. certain time periods, is arranged to give priority to a certain field of use.

10. Device according to claim 9, **characterized in**, that the terminal is arranged with two key pads, one having priority over the other and being arranged to address a certain data base.
